(19) Europäisches Patentamt
European Patent Office
Office européen des brevets

(11) Veröffentlichungsnummer: **0 084 145**
**A1**

# (12) EUROPÄISCHE PATENTANMELDUNG

(21) Anmeldenummer: 82111796.7

(22) Anmeldetag: 20.12.82

(51) Int. Cl.³: C 08 L 83/12
C 08 L 51/00, C 08 F 283/12
C 08 G 77/46, D 06 M 15/66

(30) Priorität: 30.12.81 DE 3151924

(43) Veröffentlichungstag der Anmeldung: 27.07.83 Patentblatt 83/30

(84) Benannte Vertragsstaaten: BE DE FR IT NL

(71) Anmelder: BAYER AG
Zentralbereich Patente, Marken und Lizenzen
D-5090 Leverkusen 1, Bayerwerk(DE)

(72) Erfinder: Alberts, Heinrich, Dr.
Schulstrasse 1A
D-5068 Odenthal-Blecher(DE)

(72) Erfinder: Steinberger, Helmut, Dr.
Winand-Rossi-Strasse 36
D-5090 Leverkusen 1(DE)

## (54) Wässrige Polysiloxanzubereitungen.

(57) Die vorliegende Erfindung betrifft mit Wasser mischbare oder in Wasser leicht dispergierbare modifizierte Organopolysiloxansysteme, die aus

a) Organopolysiloxanen,
b) Tensiden und/oder wasserlöslichen Polyethern und
c) Copfropfpolymerisaten, die durch Querverknüpfung über Vinylpolymerisatbrücken zwischen den Organopolysiloxanen und den Tensiden und/oder wasserlöslichen Polyethern gebildet werden, bestehen.

EP 0 084 145 A1

0084145

BAYER AKTIENGESELLSCHAFT 5090 Leverkusen, Bayerwerk

Zentralbereich
Patente, Marken und Lizenzen Br/Kü-c

# Wäßrige Polysiloxanzubereitungen

Die vorliegende Erfindung betrifft mit Wasser mischbare oder in Wasser leicht dispergierbare modifizierte Organopolysiloxansysteme.

Polysiloxane, insbesondere Polysiloxanöle lassen sich bekanntlich infolge der hohen Grenzflächenspannung an der Phasengrenzfläche Wasser/Siliconöl schwerer in Emulsionsform überführen als beispielsweise Paraffinöle.

Siliconöle, im besonderen die technischen Polydimethylsiloxanöle, sind umso schwieriger emulgierbar, je höher viskos sie sind. Schon die Erzeugung einer stabilen Emulsion aus einem Polydimethylsiloxanöl der Viskosität etwa 1000 mPas macht erhebliche Schwierigkeiten, diese wachsen mit steigender Viskosität stark an (siehe z.B. W. Noll; Chemie und Technologie der Silicone, Verlag Chemie, 2. Auflage, S. 370). Es hat daher nicht an Versuchen gefehlt, Mittel und Wege zu finden, die Emulgierbarkeit von Siliconölen zu verbessern.

Beispiele hierfür sind der Einbau von Diphenylsiloxyeinheiten in die Polydimethylsiloxankette (loc. cit., S. 370) und die Synthese von Siloxancopolymeren (vgl. z.B. DE-AS 1 595 730, DE-OS 1 745 423, DE-OS 2 413 987).

Weiterhin sind für die Emulgierung von Organosiloxanen Emulgatoren entwickelt worden, welche im Molekül einen hydrophilen und einen "siliconophilen" Organosilylgruppen enthaltenden Teil besitzen.

Diese können entweder vom Typ einer Organosilyl- oder Organosiloxanylcarbonsäure oder eines Alkohols sein (US-PS 2 584 751). Nach diesem Prinzip sind sowohl anionische als auch kationische Produkte hergestellt worden.

Darüber hinaus sind in der Literatur verschiedene Techniken beschrieben worden, mit deren Hilfe stabile Siliconölemulsionen erzielt werden können. Höher viskose Siliconöle sind dadurch in beständige Emulsionen überführt worden, daß man beispielsweise zunächst in Gegenwart eines nichtionogenen Emulgators das Öl in einem vorzugsweise einwertigen Alkohol voremulgierte und anschließend die Voremulsion in Wasser dispergierte. Ein anderer Weg wird dadurch gewiesen, daß man ein niedermolekulares Öl in wäßrige Dispersion bringt und dann in dieser mit saurem oder alkalischen Katalysator so lange umsetzt, bis das Öl zur gewünschten Molekulargröße polymerisiert ist.

Die erwähnten Maßnahmen zur Erzielung stabiler Siliconölemulsionen sind relativ kompliziert und erfordern zu ihrer Realisierung oft ein beträchtliches Maß an Hilfsmittelzusätzen.

Darüber hinaus können sich die zugesetzten Hilfsmittel als störend in bezug auf erwünschte Anwendungseffekte wie z.B. Entschäumung oder Hydrophobie erweisen. Oftmals lassen auch die Eigenschaften der nach den oben beschriebenen Verfahren hergestellten Emulsionen hinsichtlich ihrer Verdünnungsfähigkeit oder der Lagerstabilität sehr viele Wünsche offen.

Auch die Synthese von Copolymeren der Silicone mit anderen wasserlöslich machenden organischen Polymeren verläuft in der Regel über mehrere Syntheseschritte, gewöhnlich unter Verwendung von Lösungsmitteln und Hilfsbasen, die nach erfolgter Umsetzung aus dem Reaktionsgut abgetrennt werden müssen.

Die Bildung wasserlöslicher oder wasserdispergierbarer Polymerkörper ist mithin nur über aufwendige und oft mit Ausbeuteverlusten verbundene Synthesen möglich.

Es war daher Aufgabe der vorliegenden Erfindung, ein einfaches Verfahren zur Herstellung wasserlöslicher oder leicht wasserdispergierbarer Polysiloxansysteme zu schaffen.

Die Aufgabe wird erfindungsgemäß dadurch gelöst, daß man durch radikalische Polymerisation von Mischungen aus Organopolysiloxanen, wasserlöslichen Polymeren oder Tensiden wie beispielsweise Polyalkylenoxiden oder Polyalkylenoxid-Abkömmlingen und Vinylmonomeren, vorzugsweise Vinylacetat, neuartige Copolymere bildet, die über polymerisierte Einheiten aus den eingesetzten Vinylmonomeren querverbrückte Pfropfpolymere aus Organopolysiloxan und den eingesetzten Polyalkylenoxid oder Polyalkylenoxidabkömmling enthalten.

Solchermaßen hergestellte Pfropfpolymere sind, je nach Zusammensetzung, in Wasser löslich oder leicht dispergierbar; bei hohem Silicongehalt lassen sich diese Polymeren durch relativ wenig Emulgatorzusätze leicht in Wasser emulgieren.

Gegenstand der vorliegenden Erfindung sind somit mit Wasser mischbare oder in Wasser leicht dispergierbare modifizierte Organopolysiloxansysteme bestehend aus

a) Organopolysiloxanen,

b) Tensiden und/oder wasserlöslichen Polyethern und

c) Copfropfpolymerisate, die durch Querverknüpfung über Vinylpolymerisatbrücken zwischen den Organopolysiloxanen und den Tensiden und/oder wasserlöslichen Polyethern gebildet werden.

Die erfindungsgemäßen wasserlöslichen oder wasserdispergierbaren Organopolysiloxan-Pfropfpolymeren bestehen aus

| | | |
|---|---|---|
| 1. | 10 - 90 Gew.-% | Diorganopolysiloxan |
| 2. | 5 - 85 Gew.-% | Tensiden und/oder wasserlöslichen Polyethern |
| 3. | 85 - 5 Gew.-% | polymerisierten Einheiten aus Vinylverbindungen, |

wobei die Summe der Komponenten 1. bis 3. stets 100 % beträgt.

Ferner sind Gegenstand der Erfindung wäßrige Polysiloxanzubereitungen enthaltend Copfropfpolymerisatdispersionen aus

| | | |
|---|---|---|
| 1. | 10 - 90 Gew.-% | Diorganopolysiloxan |
| 2. | 5 - 85 Gew.-% | Polyoxyalkylenverbindung |
| 3. | 85 - 5 Gew.-% | polymerisierten Einheiten aus Vinylacetat |
| 4. | 0 - 50 Gew.-% | alpha, beta-ungesättigten Carbonsäuren oder ihren Derivaten. |

Vorzugsweise enthalten die erfindungsgemäßen wäßrigen Polysiloxanzubereitungen Copfropfpolymerisatdispersionen aus

1. 30 - 80 Gew.-% Diorganopolysiloxan
2. 10 - 60 Gew.-% Polyethylenoxid
3. 60 - 10 Gew.-% polymerisierten Einheiten aus Vinylacetat,

wobei die Summe der Komponenten stets 100 Gew.-% beträgt.

Ferner sind Gegenstand der vorliegenden Erfindung wäßrige Emulsionen von Pfropfpolymeren bestehend aus 60 bis 0,1, vorzugsweise 45 bis 1 Gew.-% Pfropfpolymerisatdispersionen, 0,01 bis 18 Gew.-%, vorzugsweise 0,05 bis 10 Gew.-% Emulgatoren und 99,899 bis 22, vorzugsweise 98,95 bis 45 Gew.-% Wasser. Die verwendeten Emulgatoren bestehen zweckmäßigerweise aus einer Mischung einer hydrophilen und einer hydrophoben Komponente. Geeignete Verbindungen sind z.B. Fettsäurester von Glycolen, Glycerin oder Sorbit, sowie höhere Fettalkohole oder die Anlagerungsprodukte von Ethylenoxid an diese Fettalkohole, Fettsäuren oder ähnliche Verbindungen mit aktivem Wasserstoffatom. Geeignet sind aber auch anionaktive Emulgatoren wie Natriumlaurylsulfat oder Natriumdodecylbenzolsulfonat oder Alkyl-, Aryl- bzw. Alkylarylcarboxylate oder auch kationaktive Emulgatoren wie quaternäre Ammoniumverbindungen.

Ferner ist Gegenstand der Erfindung ein Verfahren zur Herstellung von wäßrigen Polysiloxanzubereitungen, welches dadurch gekennzeichnet ist, daß

| | | | |
|---|---|---|---|
| I. | 5 - 75 | Gew.% | Wasser |
| II. | 0,5 - 15 | Gew.% | Emulgier- und/oder Dispergierhilfsmittel |
| III. | 94,5 - 10 | Gew.% | Copfropfpolymerdispersion der oben beschriebenen Art, |

wobei die Summe der Komponenten stets 100 % beträgt, bei Temperaturen zwischen Raumtemperatur und 130°C unter Einwirkung von Scherkräften in eine wäßrige Lösung oder Emulsion überführt werden.

Die Herstellung der Copfropfpolymerisatdispersionen geschieht in der Weise, daß Mischungen aus einem oder mehreren Organopolysiloxanen, Tensiden, Polyalkylenoxid oder Polyalkylenoxidabkömmlingen und einem oder mehreren Vinylmonomeren, vorzugsweise Vinylacetat, in Gegenwart von Radikalbildnern auf eine die Polymerisation auslösende Reaktionstemperatur gebracht werden.

Die Polymerisation kann nach kontinuierlichen oder diskontinuierlichen Verfahren durchgeführt werden.

Die verwendeten Organopolysiloxane sind im wesentlichen linear und können durch die folgenden Formeln dargestellt werden:

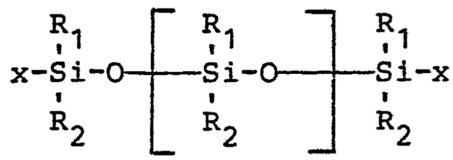

x = OH, CH = $CH_2$, $CH_3$, Phenyl

$R_1$, $R_2$ = $CH_3$, $C_2H_5$, CH = $CH_2$, Phenyl

n = 10 bis 5000.

Neben Methylgruppen können bis zu 50 Mol-% Ethyl, Vinyl oder Phenylgruppen in den Organopolysiloxankomponenten enthalten sein, bevorzugt werden aber methylsubstituierte Organopolysiloxane eingesetzt. Ferner können mit OH-Gruppen terminierte Organopolysiloxane verwendet werden.

Die verwendeten Emulgatoren bestehen zweckmäßigerweise aus einer Mischung einer hydrophilen und einer hydrophoben Komponente. Geeignete Verbindungen sind z.B. Fettsäureester mehrwertiger Alkohole, wie z.B- Stearinsäureester von Glycolen, Glycerin oder Sorbit, sowie höher Fettalkohole oder die Anlagerungsprodukte von Ethylenoxid an diese Fettalkohole, Fettsäuren oder ähnliche Verbindungen mit aktivem Wasserstoffatom. Geeignet sind aber auch anionaktive Emulgatoren wie Natriumlaurylsulfat oder Natriumdodecylbenzolsulfonat oder Alkyl-, Aryl- bzw. Alkylarylcarboxylate oder auch kationaktive Emulgatoren wie quaternäre Ammoniumverbindungen.

Die für die Copfropfpolymerisation eingesetzten Polyalkylenoxide oder Polyalkylenoxidabkömmlinge weisen in der Regel Hydroxylgruppen, vorzugsweise 1 bis 6 Hydroxylgruppen auf und werden z.B. durch Polymerisation von Epoxiden wie Ethylenoxid, Propylenoxid, Butylenoxid oder Tetrahydrofuran mit sich selbst, z.B. in Gegenwart von Polymerisationskatalysatoren oder durch Anlagerung dieser Epoxide gegebenenfalls im Gemisch oder nacheinander, an Startkomponenten mit reaktionsfähigen Wasserstoffatomen wie Wasser, Alkohole, Phenol oder Phenolabkömmlinge, Amine oder Amide hergestellt. Vorzugsweise wird Ethylenoxid oder Propylenoxid (als Gemisch oder nacheinander) eingesetzt.

Beispiele für Polyalkylenoxidabkömmlinge sind Polyglycole, die durch Polymerisation von Ethylenoxid mit Butanol oder Butylglycol als Startermolekül hergestellt werden und die die allgemeine Formel

$$C_4H_9O\,[-CH_2CH_2O-]_xH$$

besitzen, oder verzweigte Polyglycole, entstanden durch Polymerisation von Ethylenoxid und Propylenoxid in Mischung oder nacheinander, gestartet auf Trimethylolpropan, mit der Formel:

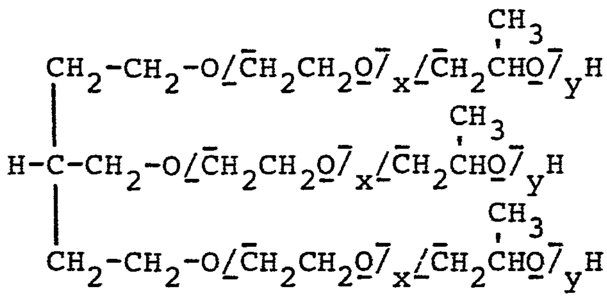

oder auf Alkylphenol gestartete, lineare, Polystyrole entstanden durch Polymerisation von Ethylenoxid, mit der Formel

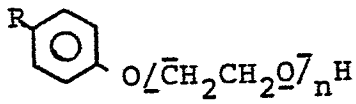

(R = n-Alkyl; i-Alkyl; n = 1 bis 100).

Als Vinylmonomere seien beispielhaft aufgeführt:

Olefine wie Ethylen, Propylen, Isobutylen, Vinylester aliphatischer oder aromatischer Carbonsäuren, vorzugsweise Vinylacetat, Vinylpropionat, α,β-ungesättigte Mono- oder Dicarbonsäuren und ihre Derivate, erwähnt seien (Meth)acrylsäure, Methyl(meth)acrylat, Ethyl(meth)acrylat, Propyl- bzw. isopropyl(meth)acrylat, n-Butyl, iso- oder tert.-Butyl(meth)acrylat, 2-Ethylhexyl(meth)acrylat, (Meth)-Acrylamid, N-Alkyl-substituierte (Meth)acrylamidderivate, (Meth)Acrylnitril, Maleinsäureanhydrid, Maleinsäureamid, N-Alkyl-Maleinimide, Maleinsäure-halb- oder diester, Vinylaromaten wie Styrol, α-Methylstyrol, 4-Chlorstyrol, Vinylchlorid, Vinylidenchlorid, Vinylidenfluorid, Tetrafluoethylen, Vinylether wie Ethylvinylether oder n-Butylvinylether; aus der Reihe der Allylverbindungen seien angeführt Allylalkohol, Allylacetat, Isobutendiacetat, 2-Methylenpropandiol-1,3, Allylethylcarbonat, Allylphenylcarbonat. Falls die Vernetzung oder Erhöhung der Molekulargewichte der Vinylharzphase gewünscht wird, können Divinylverbindungen oder Diallylverbindungen eingesetzt werden. Erwähnt seien Divinylbenzol, (Meth)Acrylsäureester mehrwertiger Alkohole wie z.B. Ethylenglykoldimethacrylat, Diethylenglykoldiacrylat und Divinylether. Vorzugsweise wird Vinylacetat verwendet.

Die radikalische Polymerisation der Vinylmonomeren kann in an und für sich bekannter Weise mit Hilfe von Radikalbildnern, UV-Strahlen, alpha-, beta- oder Gamma-Strahlen oder thermisch ohne weitere Zusätze gestartet werden. Die strahlungsinitiierte Polymerisation wird vorzugsweise in Gegenwart von Sensibilisatoren durchgeführt, vgl. z.B. A.D. Jenkins, A. Ledwith, Reactivity, Mechanism and Structure in Polymer Chemistry, John Wiley + Son, London, New York, 1974, S. 465.

Um die radikalische Polymerisation der Vinylmonomeren zu starten, werden Radikalbildner in Mengen zwischen 0,001 bis 2, vorzugsweise 0,02 bis 0,8 Gew.-% bezogen auf die Gesamtmischung aus Organopolysiloxan, Polyester und Vinylmonomere eingesetzt. Als Radikalbildner seien beispielhaft aufgeführte Azo-Initiatoren wie Azo-bis-iso-buttersäurenitril (AIBN), Azoester, Azo-Iminoester oder Azo-N-Alkylamide, Peroxide wie di-tert. Butylperoxid, Di-cumylperoxid, Di-Benzoylperoxid, Perester wie Amylperpivalat, tert. Butylperpivalat, tert. Butylperoctoat, t-Butylperbenzoat, tert. Butylperneodecanoat, Percarbonate wie Cyclohexylpercarbonat oder Hydroperoxide wie z.B. Cumylhydroperoxid, tert. Butylhydroperoxid.

Geeignete Initiatoren sind ferner Benzpinakol, Benzpinakolderivate oder andere thermisch labile hochsubstituierte Ethanderivate.

Die Polymerisation kann ferner mit Hilfe von Redoxsystemen bei tieferen Temperaturen als den rein thermischen Zerfalltemperaturen der Radikalbildner entspricht, gestartet werden.

Als Redox-Initiatoren seien beispielhaft erwähnt Kombinationen aus Peroxiden und Aminen, wie z.B. Benzoylperoxid und Triethylamin, Trialkylborverbindungen und Sauerstoff, Hydroperoxide und Sulfinsäuren, Formaldehyd oder Aldosen oder Kombinationen mit niederwertigen Übergangsmetallen und Schwefeldioxid/Peroxid-Redoxsysteme.

Die Polymerisationsreaktion kann kontinuierlich oder diskontinuierlich, drucklos oder bei Reaktionsdrucken bis z.B. 300 bar, vorzugsweise bis 15 bar, bei Reaktionstemperaturen zwischen -20°C und

+250°C, vorzugsweise 70 bis 190°C, durchgeführt werden. Die Reaktion kann auch in Gegenwart von Lösungsmitteln durchgeführt werden; genannt seien Wasser, Alkohole, wie Methanol, Ethanol, tert.-Butanol, aliphatische oder aromatische Kohlenwasserstoffe, Halogenkohlenwasserstoffe wie Chlorbenzol oder fluorierte Verbindungen, Ether wie Dioxan oder Tetrahydrofuran, Ester wie z.B. Essigsäureethylester.

Vorzugsweise wird die Polymerisation aber lösungsmittelfrei durchgeführt.

Falls gewünscht, kann die Polymerisationsreaktion in Gegenwart von Molekulargewichtsreglern durchgeführt werden. Als Regler seien aufgeführt Mercaptane wie n- oder tert.-Dodecylmercaptan, Thioglykol, Thioglycerin oder Thioessigsäureester; ferner schwefelfreie Molekulargewichtsregler wie Kohlenwasserstoffe, beispielhaft seien genannt Paraffinfraktionen wie z.B. Petrolether, Leicht- oder Waschbenzin, $\alpha$-Olefine wie z.B. Propylen, Isobutylen, Buten-1, ferner Ketone wie z.B. Aceton, Methylethylketon oder Cyclohexanon, ferner Aldehyde, wie z.B. Formaldehyd, Acetaldehyd, Propionaldehyd, Isobutyraldehyd oder Allylverbindungen wie z.B. Allylalkohol, Allylacetat, Isobutendiacetat oder Allylcarbonate. Als Telogene kommen ferner in Frage Halogenkohlenwasserstoffe wie Methylenchlorid, Tetrachlorethan, Dibrommethan usw. Wie zu erwarten, lassen sich mit Hilfe derartiger Regler die Viskositäten der Copolymeren steuern.

Der Umsetzungsgrad der eingesetzten Monomeren wird vom gewählten Polymerisationsverfahren und den Reaktionsbedingungen bestimmt. Bei der diskontinuierlichen Polymerisationsweise werden möglichst hohe Umsätze angestrebt, so daß mindestens 80 % der eingesetzten Monomeren, vorzugsweise aber mehr als 90 % umgesetzt werden. Die Entfernung der Restmonomeren erfolgt nach bekannten Verfahren destillativ bei Normaldruck oder unter vermindertem Druck. Die nach der Aufarbeitung in den Dispersionen noch effektiv gefundenen Restmonomergehalte sind vernachlässigbar gering, sie liegen im allgemeinen unter 1000 ppm, vorzugsweise unter 100 ppm.

Die erfindungsgemäßen Pfropfcopolymeren finden Anwendung als Textilhilfsmittel wie beispielsweise zur Griffvariation bei synthetischen und natürlichen Fasermaterialien und Flächengebilden, weiterhin als Ausrüstungsmittel für Fadenmaterialien zur Verbesserung der Gleitfähigkeit des Fadens bei Nähprozessen.

Die folgenden Beispiele erläutern die Herstellung der erfindungsgemäßen Silicon-Polyether-Vinylpolymerdispersionen.

Wenn nichts anderes vermerkt, sind Mengenangaben als Gewichtsteile bzw. Gewichtsprozente zu verstehen.

Herstellung der Ausgangssubstanzen:

Die Herstellung der Polydiorganosiloxane erfolgt in an sich bekannter Weise (vgl. W. Noll, Chemie und Technologie der Silikone, Verlag Chemie GmbH, Weinheim/Bergstr., 2. Auflage, 1968, Kap. 5, 162 ff).

Die in den Beispielen aufgeführten Polysiloxane sind wie folgt gekennzeichnet:

| Polysiloxan-Nr. | Beschreibung | Viskosität mPas bei 25°C |
|---|---|---|
| 1 | Polydimethylsiloxan | 1000 |
| 2 | OH-endgestopptes Polydimethylsiloxan | 5000 |
| 3 | Si-H-gruppenhaltig, Trimethylsilyl endgestoppt | 20 |

Die in den Beispielen aufgeführten Polyalkylenoxide oder Polyalkylenoxidabkömmlinge weisen folgende Kenndaten auf:

| Polyalkylenoxid | Zusammensetzung | physikal. Kenndaten |
|---|---|---|
| A | Polyethylenglykol | Fp.:58-60°C<br>MG ca. 1500 |
| B | Sorbitantrioleat | |
| C | Oleylalkoholethoxylat | |
| D | Oleylalkoholethoxylat | |

Beispiel 1 und 2:

In einem 6 l-Rührkessel werden unter Stickstoff 1000 g Polyalkylenoxid A und 1600 g Polysiloxan Nr. 2 vorgelegt. Man erwärmt unter Rühren auf 110 °C und gibt sodann die Lösung innerhalb von 2 Stunden bei 110°C Innentemperatur hinzu:

| Bspl.-Nr. | Lösung Vinyl-acetat | Polysiloxan Nr. 2 | tert. Butyl-perpivalat | Azo-diiso-buttersäure-diethylat |
|---|---|---|---|---|
| 1 | 1000 | 400 | 4,5 | - |
| 2 | 1000 | - | - | 6,0 |

Anschließend wird 1 Stunden bei 110°C nachgerührt und die flüchtigen Anteile sodann im Vakuum abdestilliert. Der Vinylacetatumsatz beträgt bei Beispiel 1: 94,5 % und bei Beispiel 2: 92,8 %. Nach dem Abkühlen auf Raumtemperatur sind die Produkte fest.

Beispiel 3:

In einem 6 l-Rührkessel werden unter Stickstoff 1000 g Polyalkylenoxid A, 1600 g Polysiloxan Nr. 1 auf 110°C unter Rühren erwärmt. Dann wird innerhalb von 2 Stunden eine Lösung aus 1000 g Vinylacetat, 400 g Polysiloxan-Nr. 1 und 4,5 g tert. Butylperpivalat hinzugegeben, und die Innentemperatur konstant bei 110°C gehalten. Anschließend

wird 1 Stunde bei 110°C nachgerührt und sodann die flüchtigen Anteile im Vakuum abgezogen. Der Vinylacetatumsatz beträgt 92,1 %. Nach dem Abkühlen auf Raumtemperatur hat die Dispersion eine Viskosität von 8000 mPas.

Beispiel 4:

In einem 2 l-Rührkessel werden unter Stickstoff 450 g Polysiloxan Nr. 1 und je 225 g Polyalkylenoxid B und C auf 110°C erwärmt. Dann wird bei einer Innentemperatur von 110°C eine Lösung aus 300 g Vinylacetat, 150 g Polysiloxan Nr. 1 und 1,7 g tert. Butylperpivalat innerhalb von 2 Stunden nachgerührt und die flüchtigen Anteile im Vakuum abgezogen. Der Vinylacetatumsatz beträgt 91 % und die Viskosität der auf Raumtemperatur abgekühlten Dispersion wird mit 46.500 mPas gemessen.

Beispiel 5:

In einem 2 l-Rührkessel werden unter Stickstoff 300 g Polysiloxan Nr. 2 und 300 g Polyalkyenoxid D auf 110°C erwärmt. Dann wird eine Lösung aus 200 g Vinylacetat, 100 g Polysiloxan 2 und 1,2 g tert. Butylperpivalat innerhalb von 2 Stunden hinzugegeben und 2 Stunden bei 110°C nachgerührt. Die flüchtigen Anteile werden im Vakuum abdestilliert. Der Vinylacetatumsatz beträgt 93,6 %. Das Reaktionsprodukt ist bei Raumtemperatur fest.

Beispiel 6:

In einem 2 l-Rührkessel werden unter Stickstoff 450 g Polysiloxan Nr. 1 und 450 g Dimethylbenzyldodecylammoniumchlorid auf 110°C erwärmt. Dann wird bei einer Innentemperatur von 110°C eine Lösung aus 150 g Vinylacetat, 150 g Polysiloxan Nr. 1 und 2,5 g tert. Butylperpivalat innerhalb von 2 Stunden hinzugegeben. Anschließend wird 1 Stunde nachgerührt und die flüchtigen Anteile im Vakuum abgezogen. Der Vinylacetatumsatz beträgt 94 % und die Viskosität der auf 25°C abgekühlten Dispersion wird mit 14.000 mPas gemessen.

Beispiel 7:

In einem 2 l-Rührkessel werden unter Stickstoff 450 g Polysiloxan Nr. 1 und je 225 g Polyalkylenoxid B und C auf 100°C erwärmt und bei einer Innentemperatur von 100°C eine Lösung von 300 g Vinylacetat, 150 g Polysiloxan Nr.1 und 2,25 g tert. Butylperpivalat in 2 Stunden zudosiert. Anschließend wird 1 Stunde nachgerührt und die flüchtigen Anteile im Vakuum abgezogen. Der Vinylacetatumsatz beträgt 91 % und die Viskosität der auf 25°C abgekühlten Dispersion wird mit 46.000 mPas gemessen.

Beispiel 8:

In einem 6 l-Rührkessel werden unter Stickstoff 3 kg des Polysiloxans Nr. 3 vorgelegt und auf 110°C erwärmt.

Dann wird innerhalb von 2 Stunden eine Lösung von 7,5 g tert. Butylperpivalat in 750 g Vinylacetat bei einer Innentemperatur von 110°C zudosiert. Anschließend wird eine Stunde nachgerührt und sodann die flüchtigen Anteile im Vakuum abgezogen. Der Vinylacetatumsatz beträgt 93,5 %. Nach dem Abkühlen auf Raumtemperatur hat das klare Produkt eine Viskosität von 170 mPas.

Beispiel 9:

In einem 6 l-Rührkessel werden unter Stickstoff 1600 g eines Glycol-Siloxan-Copolymers mit einem mittleren Molgewicht von 10.500 und einem Siloxangehalt von 48 % sowie 1000 g des Polyalkylenoxids A vorgelegt und auf 110°C erwärmt. Innerhalb von 2 Stunden wird eine Mischung aus 1000 g Vinylacetat und 6 g Azobisisobuttersäurediethylester zudosiert und anschließend eine Stunde nachgerührt. Sodann werden die flüchtigen Anteile im Vakuum abgezogen. Der Vinylacetatumsatz beträgt 94,8 %. Nach dem Abkühlen auf Raumtemperatur erhält man eine feste, wachsartige Masse.

Beispiel 10:

Zu 40,0 kg einer Pfropfcopolymerdispersion des Beispiels 3 werden unter Rühren 1,6 kg eines mit 50 Mol Ethylenoxid ethoxylierten Oleylalkohols und 1,4 kg eines mit 6 Mol Ethylenoxid umgesetzten Tridecylalkohols gegeben. Die Mischung wird auf 60°C erwärmt und unter Rühren werden 57,0 kg Wasser eingearbeitet. Man erhält eine homogene und stabile Emulsion des Pfropfcopolymers.

Beispiel 11 bis 17:

In zu Beispiel 10 analoger Vorgehensweise erhält man Emulsionen folgender Zusammensetzungen:

| Pfropfcopolymer des Beispiels | Gew.-% | Emulgator | Hochdruckhomogenisierung |
|---|---|---|---|
| 4 | 35 | 1 % Sorbitantrioleat | nein |
| 5 | 40 | 1,5 % Sorbitantrioleat, 1,5 % Oleyl-50-ethoxylat | 1 mal 200 bar |
| 6 | 30 | - | 1 mal 200 bar |
| 7 | 35 | 1 % Sorbitantrioleat | 2 mal 200 bar |
| 8 | 40 | - | nein |
| 9 | 30 | - | 1 mal 200 bar |

Patentansprüche:

1. Mit Wasser mischbare oder in Wasser leicht dispergierbare modifizierte Organopolysiloxansysteme bestehend aus
   a) Organopolysiloxanen,
   b) Tensiden und/oder wasserlöslichen Polyethern und
   c) Copfropfpolymerisaten, die durch Querverknüpfung über Vinylpolymerisatbrücken zwischen den Organopolysiloxanen und den Tensiden und/oder wasserlöslichen Polyethern gebildet werden.

2. Organopolysiloxansysteme gemäß Anspruch 1, dadurch gekennzeichnet, daß sie aus
   a) 10 - 90 Gew.-% Diorganopolysiloxan,
   b) 5 - 85 Gew.-% Tensid und/oder wasserslöslicher Polyether
   c) 85 - 5 Gew.-% polymerisierten Einheiten aus Vinylverbindungen,

   wobei die Summe der Komponenten a) bis c) stets 100% beträgt, bestehen.

3. Organopolysiloxansysteme gemäß Anspruch 1, dadurch gekennzeichnet, daß sie aus
   a) 10 - 90 Gew.-% Diorganopolysiloxan,
   b) 5 - 85 Gew.-% Tensid und/oder wasserlöslichen Polyethern
   c) 85 - 5 Gew.-% polymerisierten Einheiten aus Vinylestern, ß-ungesättigten Carbonsäuren, Derivaten

α,β-ungesättigter Mono- und Dicarbonsäuren, Vinylaromaten, α-Olefinen, Vinylether, halogenierten Vinylmonomeren wie Allylverbindungen, Divinylverbindungen oder (Meth)Acrylsäureester mehrwertiger Alkohole, oder Gemische dieser Monomere bestehen,

wobei die Summe der Komponenten a) bis c) stets 100 % beträgt.

4. Verfahren zur Herstellung von Organopolysiloxansystemen gemäß einem der Ansprüche 1 bis 3, dadurch gekennzeichnet, daß Mischungen aus

a) 10 - 90 Gew.-% Diorganopolysiloxan

b) 4.999 - 85 Gew.-% Tensid und/oder wasserlöslicher Polyether

c) 85 - 5 Gew.-% eines oder mehrerer Vinylmonomere

d) 0,001 - 2 Gew.-% eines oder mehrerer Radikalbildner,

wobei die Summe der Komponenten a) bis d) stets 100 % beträgt, bei Temperaturen zwischen Raumtemperatur und 250°C einer Polymerisationsreaktion unterzogen werden.

5. Verwendung von Organopolysiloxansystemen gemäß einem der Ansprüche 1 bis 3 als Textilhilfsmittel.

0084145

Europäisches Patentamt

# EUROPÄISCHER RECHERCHENBERICHT

Nummer der Anmeldung

EP 82 11 1796

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 029 947 (BAYER AG)<br>* Ansprüche 1-3, 8 *<br>--- | 1-4 | C 08 L 83/12<br>C 08 L 51/00<br>C 08 F 283/12<br>C 08 G 77/46<br>D 06 M 15/66 |
| P,A | EP-A-0 058 340 (BAYER AG)<br>* Ansprüche 1-3 *<br>--- | 1,4 | |
| A | DE-A-2 808 504 (CIBA-GEIGY AG)<br>* Ansprüche 1-3 ; Seite 14, Zeile 4 - Seite 15, Zeile 12 *<br>--- | 4,5 | |
| A | DE-A-1 570 831 (IMPERIAL CHEMICAL INDUSTRIES LTD.)<br>* Seite 39, Zeile 1 - Seite 40, Zeile 2 ; Beispiele 5, 6 *<br>--- | 4 | |
| A | US-A-3 342 766 (D.P. HUNTINGTON)<br>* Anspruch 1 *<br>----- | 4 | RECHERCHIERTE SACHGEBIETE (Int. Cl. 3)<br>C 08 F 283/12<br>C 08 G 77/00<br>C 08 L 51/08<br>C 08 L 53/02<br>C 08 L 83/00<br>D 06 M 15/66 |

Der vorliegende Recherchenbericht wurde für alle Patentansprüche erstellt.

| Recherchenort | Abschlußdatum der Recherche | Prüfer |
|---|---|---|
| BERLIN | 21-03-1983 | HASS C V F |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82